Europäisches Patentamt

**European Patent Office**

**Office européen des brevets**

(19)

(11) Veröffentlichungsnummer: **0 042 086**
**B1**

(12) **EUROPÄISCHE PATENTSCHRIFT**

(45) Veröffentlichungstag der Patentschrift:
**20.03.85**

(21) Anmeldenummer: **81104035.1**

(22) Anmeldetag: **26.05.81**

(51) Int. Cl.⁴: **G 01 N 27/56**, G 01 N 33/20

(54) Vorrichtung zur Bestimmung des aktiven Sauerstoffgehaltes von Metallschmelzen.

(30) Priorität: **12.06.80 DE 3021949**

(43) Veröffentlichungstag der Anmeldung:
**23.12.81 Patentblatt 81/51**

(45) Bekanntmachung des Hinweises auf die Patenterteilung:
**20.03.85 Patentblatt 85/12**

(84) Benannte Vertragsstaaten:
**AT BE CH FR GB IT LI LU NL SE**

(56) Entgegenhaltungen:
**DE - B - 2 811 066**
**DE - U - 7 907 878**
**FR - A - 1 493 717**
**FR - A - 2 390 727**

(73) Patentinhaber: **ELECTRO-NITE N.V., Grote Baan 27a,
B-3530 Houthalen (BE)**

(72) Erfinder: **Surinx, Hubertus Johannes Josephus,
Vossenbergstraat 73, B-3500 Hasselt (BE)**

(74) Vertreter: **Radt, Finkener, Ernesti Patentanwälte,
Heinrich-König-Strasse 119, D-4630 Bochum 1 (DE)**

## Beschreibung

Die Erfindung betrifft eine Vorrichtung zur Bestimmung des aktiven Sauerstoffgehaltes von Gusseisen-, Eisen- oder Stahlschmelzen mit einem am Ende eines Tragrohres befestigten Messkopf aus einer Keramikmasse, in der eine aus einer Zirkonoxidmasse und einer Bezugsmasse bestehende elektro-chemische Zelle angeordnet ist, die mit einem dicht an der Zirkonoxidmasse anliegenden Schutzschirm versehen ist, der die elektro-chemische Zelle gegenüber der Schmelze abschirmt und beim Eintauchen des Messkopfes in die Metallschmelze zerstört wird, wobei die aus der Zirkonoxidmasse und der Bezugsmasse bestehende elektro-chemische Zelle vollständig mit einer Umhüllung versehen ist, die teilweise aus dem dicht an der Zirkonoxidmasse anliegenden Schutzschirm besteht.

Bei einer Ausführungsform dieser aus der DE-A-2 842 136 bekannten Vorrichtung, bei der die Zirkonoxidmasse die Form eines Röhrchens hat, das aus dem aus der Keramikmasse bestehenden Körper herausragt und bei der die Bezugsmasse in dem Röhrchen angeordnet ist, wobei der Schutzschirm ebenfalls röhrchenförmig ausgebildet ist und wenigstens die gleiche Länge hat wie der aus der Keramikmasse herausragende Abschnitt des aus der Zirkonoxidmasse bestehenden Röhrchens, ist vorgesehen, dass das den Schutzschirm bildende Röhrchen auf das aus der Zirkonoxidmasse bestehende Röhrchen aufschiebbar ist und der Innendurchmesser des Schutzschirmes praktisch dem Aussendurchmesser des Röhrchens entspricht, so dass der Schutzschirm an der elektro-chemischen Zelle dicht anliegt.

Bei einer anderen Ausführungsform dieser bekannten Vorrichtung hat die Zirkonoxidmasse die Form einer Scheibe, die in einer vorderen Ausnehmung des aus der Keramikmasse bestehenden Teils auf der Bezugsmasse aufliegt. Dabei ist der Schutzschirm scheibenförmig ausgebildet, liegt auf der oberen Fläche der aus Zirkonoxid bestehenden Scheibe auf und ist mit einem geeigneten Verbindungsmittel, vorzugsweise feuerfestem Zement, befestigt. Mit einer derartigen Vorrichtung, die sehr einfach aufgebaut ist, lassen sich Wärmestösse vermeiden. Beim praktischen Einsatz haben sich in einigen Fällen zunächst nicht erklärbare Fehlmessungen ergeben. Die Aufgabe, die der Erfindung zugrundeliegt, besteht darin, das Auftreten von Fehlmessungen mit Sicherheit zu vermeiden.

Der Erfindung liegt die Erkenntnis zugrunde, dass die aufgetretenen Störungen auf das Vorhandensein von Feuchtigkeit in der Zelle, insbesondere der Bezugsmasse, zurückzuführen sind und dass die Zelle diese Feuchtigkeit infolge der Porosität des Zirkonoxidröhrchens bzw. der Zirkonoxidscheibe sowie über die Füllmasse aufnimmt, die meist aus $Al_2O_3$ besteht. Weitere Feuchtigkeit entstammt z.B. dem Zement, mit dem der Messkopf ausgefüllt und befestigt wird.

Das Eindringen von Feuchtigkeit in die Zelle lässt sich auch nicht mit der aus der FR-A-1 493 717 bekannten Vorrichtung vermeiden, die zur Bestimmung der Sauerstoffaktivität in flüssigen Metallen dient und eine Öffnung aufweist, durch die ein als Vergleichssubstanz dienendes Gas in das Innere der elektro-chemischen Zelle eingeleitet werden kann. Wird statt eines Gases eine feste Substanz als Vergleichssubstanz benutzt, so soll diese in einer Verpackung, die bei hohen Temperaturen vergast und schmilzt, in das Innere der Zelle eingeführt werden. Durch diese Massnahme lässt sich nicht vermeiden, dass Feuchtigkeit von aussen in die elektro-chemische Zelle eindringt. Die DE-B-2 811 066 und die FR-A-2 390 727 betreffen einen Sauerstoffmessfühler, der mit einer Luft-Referenz arbeitet, so dass einmal keine vor Nässe zu schützende Bezugsmasse vorliegt und andererseits der Innenraum der Zelle unbedingt mit der Aussenatmosphäre in Berührung stehen muss.

Ausgehend von einer Vorrichtung der eingangs beschriebenen Art sowie der als überraschend anzusehenden Erkenntnis erfolgt die Lösung der Aufgabe erfindungsgemäss dadurch, dass die Zirkonoxidmasse die Form eines Röhrchens hat, auf das der Schutzschirm aufgeschoben ist, wobei, falls das Zirkonoxidröhrchen gegenüber dem Schutzschirm vorsteht, der überstehende Abschnitt mit einer vorzugsweise aus Kunststoff bestehenden Umhüllung versehen ist, die während der Herstellung und Lagerung das Eindringen von Feuchtigkeit verhindert, während, wenn der Schutzschirm mindestens die gleiche Länge hat wie das Zirkonoxidröhrchen, sein unten offenes Ende mit einem das Eindringen von Feuchtigkeit verhindernden Verschluss versehen ist.

Bei einer Ausbildung der Erfindung ist vorgesehen, dass der Schutzschirm gegenüber dem unten offenen Ende des Zirkonoxidröhrchens vorsteht und dass der Verschluss stopfenartig ausgebildet ist, an der Innenwandung des Schutzschirmes anliegt und mit einem verjüngten Abschnitt in das Zirkonoxidröhrchen hineinragt. Der Verschluss kann aus einem Zweikomponentenleim und Silikongummi bestehen.

Bei einer Variante der Erfindung, bei der die Zirkonoxidmasse die Form einer Scheibe hat, die in einer vorderen Ausnehmung des aus der Keramikmasse bestehenden Teils über der Bezugmasse angeordnet ist, und der Schutzschirm scheibenförmig ausgebildet und auf der oberen Fläche der Scheibe vorzugsweise mit feuerfestem Zement befestigt ist, erfolgt die Lösung der Aufgabe dadurch, dass die Wandungen der vorderen Ausnehmung in der Keramikmasse mit einer das Eindringen von Feuchtigkeit verhindernden Umhüllung versehen sind, die die Zirkonoxidmasse und die Bezugsmasse umhüllt.

Selbstverständlich soll die in der Zelle enthaltene Luft möglichst keine Feuchtigkeit enthalten. Zu diesem Zweck kann die Bezugsmasse und auch die Zirkonoxidmasse vorher getrocknet werden. Es hat sich ferner als zweckmässig erwiesen, die in der Zelle enthaltene Luft nach dem Aufbringen der Umhüllung zu entfernen und gegebenenfalls durch ein inertes Gas, z.B. Argon, zu ersetzen.

Auf diese Weise wird die Bezugsmasse während der Lagerung gegenüber der oxidierenden Wirkung der Luft geschützt. Zu diesem Zweck ist vorgesehen, die Umhüllung und/oder den Verschluss mit einer Abzugseinrichtung, vorzugsweise einem Stutzen, zu versehen, über den die Luft abgesaugt und der nach dem Absaugen bzw. nach dem Einfüllen eines inerten Gases durch Zukneifen und/oder Erwärmen verschlossen wird.

Durch die Vorrichtung gemäss vorliegender Erfindung gelingt es, das Eindringen von Feuchtigkeit in das Innere der Zelle zu vermeiden und die Bezugsmasse hiergegen zu schützen, so dass auf das Eindringen von Feuchtigkeit zurückzuführende Fehlmessungen mit Sicherheit ausgeschaltet werden konnten.

Auf der Zeichnung sind drei Ausführungsbeispiele der Erfindung schematisch dargestellt. Es zeigen:

Fig. 1 einen Schnitt durch einen Messkopf, bei dem die elektro-chemische Zelle aus einem Zirkonoxidröhrchen besteht, in dessen oberem Abschnitt die Bezugsmasse angeordnet ist,

Fig. 2 ebenfalls im Schnitt eine andere Art der Umhüllung des Zirkonoxidröhrchens der auf Fig. 1 dargestellten Ausführungsform und

Fig. 3 einen senkrechten Schnitt durch den oberen Abschnitt eines Messkopfes, bei dem die Zirkonoxidmasse die Form einer Scheibe hat.

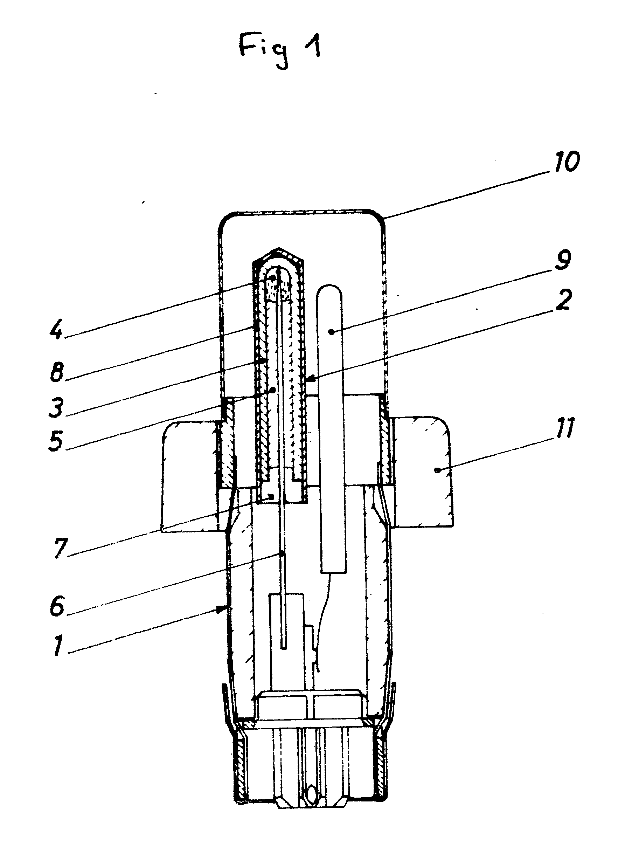

Der untere Teil des auf Fig. 1 dargestellten Messkopfes 1 enthält die Steckvorrichtung zum Anschluss an eine Messlanze und ist in bekannter Weise ausgebildet. Mit 11 ist die Keramikmasse bezeichnet, der die eigentliche Messzelle, sowie ein Thermoelement 9 aufnimmt. Die elektrochemische Zelle 2 besteht aus einem Zirkonoxidröhrchen 3, in dessen oberem geschlossenem Abschnitt die Bezugsmasse 4 angeordnet ist. Der übrige Raum des Röhrchens ist mit einer Füllmasse 5, vorzugsweise aus Aluminiumoxid ($Al_2O_3$) ausgefüllt. Durch diese erstreckt sich ein bis zu der Steckvorrichtung geführter Leiter 6, z.B. ein Molybdändraht, der innerhalb der Bezugsmasse 4 endet. Das Zirkonoxidröhrchen 3 ist mit einem dicht an diesem anliegenden Schutzschirm 8 umgeben, der aus einem Metall besteht, das beim Eintauchen in die Metallschmelze schmilzt. Der Schutzschirm ragt an seinem unten offenen Ende ein Stück über das Zirkonoxidröhrchen hinaus und ist mit einem Verschluss 7 versehen, durch den der Leiter 6 dicht hindurchgeführt ist und der das untere Ende des Zirkonoxidröhrchens 3 dicht abschliesst. Bei der auf der Zeichnung dargestellten Ausführungsform ragt der Verschluss 7 mit einem verjüngten Abschnitt ein Stück in das Zirkonoxidröhrchen hinein, während der Abschnitt mit dem grösseren Durchmesser dicht an der Innenwandung des Schutzschirmes anliegt. Mit 10 ist eine Schutzkappe bezeichnet, die üblicherweise bei derartigen Messvorrichtungen benutzt wird und die beispielsweise aus Pappe oder aber auch aus Metall bestehen kann.

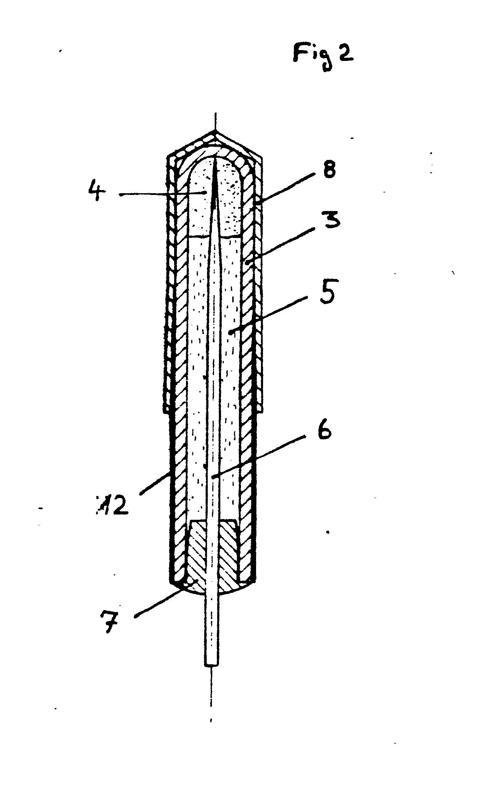

Die Umhüllung des Zirkonoxidröhrchens kann auch in der auf Fig. 2 dargestellten Weise erfolgen, bei der für sich entsprechende Teile die gleichen Bezugszeichen gewählt wurden wie bei der vorstehend erläuterten Fig. 1. Bei der zweiten Ausführungsform ist das Zirkonoxidröhrchen 3 ebenfalls mit einem dicht an diesem anliegenden Schutzschirm 8 umgeben, der sich jedoch nicht bis zu dem unten offenen Ende des Zirkonoxidröhrchens erstreckt, sondern nur über beispielsweise ⅔ der Länge. Der untere Abschnitt des Röhrchens ist mit einer das Eindringen von Feuchtigkeit verhindernden Umhüllung 12, z.B. aus Kunststoff, umgeben, die ein Stück unter das offene Ende des Schutzschirmes geführt ist, um eine einwandfreie Abdichtung zu erzielen und am unteren Ende des Zirkonoxidröhrchens an den Verschluss 7 anschliesst.

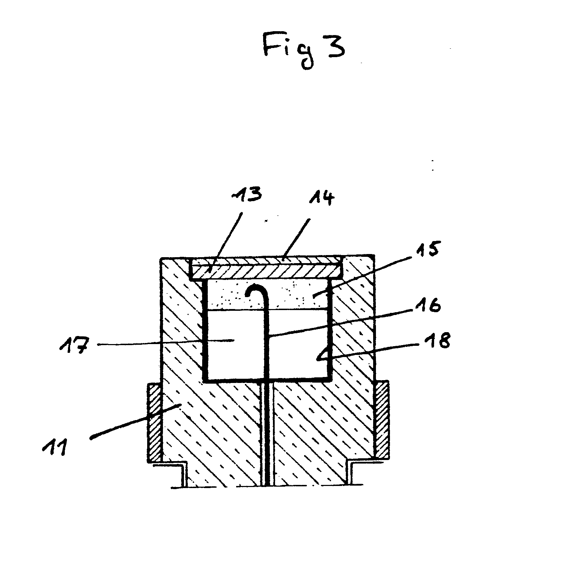

Auf Fig. 3 ist die Ausführungsform dargestellt, bei der die Zirkonoxidmasse die Form einer Scheibe 13 hat, die in einer vorderen Ausnehmung 17 der Keramikmasse 11 angeordnet ist. Der ebenfalls scheibenförmig ausgebildete Schutzschirm 14 liegt dabei auf der oberen Fläche der Scheibe 13 aus Zirkonoxid auf und ist mit einem geeigneten Verbindungsmittel, vorzugsweise feuerfestem Zement oder Kitt, an der Keramikmasse 11 befestigt. In der vorderen Ausnehmung dieser Keramikmasse befindet sich ferner die Bezugsmasse 15, in der der Leiter 16 endet. Die gesamte vordere Ausnehmung 17 des aus der Keramikmasse bestehenden Teils des Messkopfes ist mit einer Umhüllung oder Beschichtung 18 versehen, die die aus der Zirkonoxidmasse und der Bezugsmasse bestehende elektro-chemische Zelle vollständig umgibt und das Eindringen von Feuchtigkeit verhindert.

**Patentansprüche**

1. Vorrichtung zur Bestimmung des aktiven Sauerstoffgehaltes von Gusseisen-, Eisen- oder Stahlschmelzen mit einem am Ende eines Tragrohres befestigten Messkopf aus einer Keramikmasse, in der eine aus einer Zirkonoxidmasse und einer Bezugsmasse bestehende elektrochemische Zelle angeordnet ist, die mit einem dicht an der Zirkonoxidmasse anliegenden Schutzschirm versehen ist, der die elektro-chemische Zelle gegenüber der Schmelze abschirmt und beim Eintauchen des Messkopfes in die Metallschmelze zerstört wird, wobei die aus der Zirkonoxidmasse und der Bezugsmasse bestehende elektro-chemische Zelle vollständig mit einer Umhüllung versehen ist, die teilweise aus dem dicht an der Zirkonoxidmasse anliegenden Schutzschirm besteht, dadurch gekennzeichnet, dass die Zirkonoxidmasse (3) die Form eines Röhrchens hat, auf das der Schutzschirm (8) aufgeschoben ist, wobei, falls das Zirkonoxidröhrchen (3) gegenüber dem Schutzschirm (8) vorsteht, der überstehende Abschnitt mit einer vorzugsweise aus Kunststoff bestehenden Umhüllung versehen ist, die während der Herstellung und Lagerung das Eindringen von Feuchtigkeit verhindert, während, wenn der Schutzschirm (8) mindestens die gleiche Länge hat wie das Zirkonoxidröhrchen (3), sein unten offenes Ende mit einem das Eindringen von Feuchtigkeit verhindernden Verschluss (7) versehen ist.

2. Vorrichtung nach Anspruch 1, dadurch gekennzeichnet, dass der Schutzschirm (8) gegenüber dem unten offenen Ende des Zirkonoxidröhrchens (3) vorsteht und dass der Verschluss (7) stopfenartig ausgebildet ist, an der Innenwandung des Schutzschirmes (8) anliegt und mit einem verjüngten Abschnitt in das Zirkonoxidröhrchen (3) hineinragt.

3. Vorrichtung nach Anspruch 2, dadurch gekennzeichnet, dass der Verschluss (7) aus einem Zweikomponentenleim und Silikongummi besteht.

4. Vorrichtung zur Bestimmung des aktiven Sauerstoffgehaltes von Gusseisen-, Eisen- oder Stahlschmelzen mit einem am Ende eines Tragrohres befestigten Messkopf aus einer Keramikmasse, in der eine aus einer Zirkonoxidmasse und einer Bezugsmasse bestehende elektrochemische Zelle angeordnet ist, die mit einem dicht an der Zirkonoxidmasse anliegenden Schutzschirm versehen ist, der die elektro-chemische Zelle gegenüber der Schmelze abschirmt und beim Eintauchen des Messkopfes in die Metallschmelze zerstört wird, wobei die aus der Zirkonoxidmasse und der Bezugsmasse bestehende elektro-chemische Zelle vollständig mit einer Umhüllung versehen ist, die teilweise aus dem dicht an der Zirkonoxidmasse anliegenden Schutzschirm besteht, die Zirkonoxidmasse die Form einer Scheibe hat, die in einer vorderen Ausnehmung des aus der Keramikmasse bestehenden Teils über der Bezugsmasse angeordnet ist, und der Schutzschirm scheibenförmig ausgebildet und auf der oberen Fläche der Scheibe vorzugsweise mit feuerfestem Zement befestigt ist, dadurch gekennzeichnet, dass die Wandungen der vorderen Ausnehmung (17) in der Keramikmasse (11) mit einer das Eindringen von Feuchtigkeit verhindernden Umhüllung (18) versehen sind, die die Zirkonoxidmasse (13) und die Bezugsmasse (15) umhüllt.

**Claims**

1. A device for determining the active oxygen content of cast iron, iron or steel melts, having a ceramic measuring head which is secured to the end of a carrier tube and which contains an electrochemical cell consisting of a zirconium oxide material and a reference material and provided with a shield which closely adjoins the zirconium oxide material and which shields the electrochemical cell from the melt and is destroyed on immersion of the measuring head in the melt, the electrochemical cell which consists of the zirconium oxide material and the reference material being completely surrounded by a covering consisting partially of the shield closely adjoining the zirconium oxide material, characterised in that the zirconium oxide material (2) is in the form of a small tube over which the shield (8) is fitted, and in the event of the zirconium oxide tube (3) projecting with respect to the shield (8) the projecting part is provided with a preferably plastics covering which prevents the penetration of moisture during production and storage, while when the shield (8) is at least of the same length as the zirconium oxide tube (3) its bottom open end is provided with a closure (7) which prevents the penetration of moisture.

2. A device according to claim 1, characterised in that the shield (8) projects with respect to the end of the zirconium oxide tube (3) open at the bottom and the closure (7) is in the form of a plug, bears against the inner wall of the shield (8), and projects into the zirconium oxide tube (3) by a tapered portion.

3. A device according to claim 2, characterised in that the closure (7) consists of a two-component glue and silicone rubber.

4. A device for determining the active oxygen content of cast iron, iron or steel melts, having a ceramic measuring head which is secured to the end of a carrier tube and which contains an electrochemical cell consisting of a zirconium oxide material and a reference material and provided with a shield which closely adjoins the zirconium oxide material and which shields the electrochemical cell from the melt and is destroyed on immersion of the measuring head in the melt, the electrochemical cell which consists of the zirconium oxide material and the reference material being completely surrounded by a covering consisting partially of the shield closely adjoining the zirconium oxide material, the zirconium oxide material is in the form of a disc disposed in a front recess in the ceramic part above the reference material, and the shield is in the form of a disc and is secured, preferably by refractory cement, on the top surface of the disc, characterised in that the walls of the front recess (17) in the ceramic material (11) are provided with a covering (18) which prevents the penetration of moisture and which covers the zirconium oxide material (13) and the reference material (15).

**Revendications**

1. Dispositif pour déterminer la teneur en oxygène actif de bains de fonte, de fer ou d'acier en fusion, comportant une tête de mesure fixée à l'extrémité d'un tube de support et consistant en une masse céramique dans laquelle se trouve une cellule électrochimique comprenant une masse d'oxyde de zirconium et une masse de référence et dotée d'un écran protecteur qui est appliqué intimement contre la masse d'oxyde de zirconium, protège la cellule électrochimique du bain en fusion et est détruit lorsque la tête de mesure est plongée dans le bain de métal fondu, la cellule électrochimique, comprenant la masse d'oxyde de zirconium et la masse de référence, étant intégralement pourvue d'une enveloppe constituée en partie par l'écran protecteur appliqué intimement contre la masse d'oxyde de zirconium, caractérisé par le fait que la masse d'oxyde de zirconium (3) présente la forme d'un petit tube sur lequel l'écran protecteur (8) est enfilé et, dans le cas où le petit tube (3) en oxyde de zirconium fait saillie par rapport à l'écran protecteur (8), le tronçon saillant est muni d'une enveloppe consistant de préférence en une matière plastique et empêchant la pénétration d'humidité lors de la fabrication et du stockage, tandis que, lorsque l'écran protecteur (8) a au moins la même longueur que le petit tube (3) en oxyde de zirconium, son extrémité inférieure ouverte est dotée d'une obturation (7) empêchant la pénétration d'humidité.

2. Dispositif selon la revendication 1, caractérisé par le fait que l'écran protecteur (8) fait saillie par rapport à l'extrémité inférieure ouverte du petit tube (3) en oxyde de zirconium; et par le fait que l'obturation (7) est réalisée à la manière d'un bouchon, est appliquée contre la paroi interne de l'écran protecteur (8) et pénètre par un tronçon de section décroissante dans le petit tube (3) en oxyde de zirconium.

3. Dispositif selon la revendication 2, caractérisé par le fait que l'obturation (7) consiste en un adhésif à deux composants et en du caoutchouc siliconé.

4. Dispositif pour déterminer la teneur en oxygène actif de bains de fonte, de fer ou d'acier en fusion, comportant une tête de mesure fixée à l'extrémité d'un tube de support et consistant en une masse céramique dans laquelle se trouve une cellule électrochimique comprenant une masse d'oxyde de zirconium et une masse de référence et dotée d'un écran protecteur qui est appliqué intimement contre la masse d'oxyde de zirconium, protège la cellule électrochimique du bain en fusion et est détruit lorsque la tête de mesure est plongée dans le bain en métal fondu, la cellule électrochimique, comprenant la masse d'oxyde de zirconium et la masse de référence, étant intégralement pourvue d'une enveloppe constituée en partie par l'écran protecteur appliqué intimement contre la masse d'oxyde de zirconium, la masse d'oxyde de zirconium ayant la forme d'un disque qui est logé, au-dessus de la masse de référence, dans un évidement antérieur de la partie constituée par la masse céramique, et l'écran protecteur étant de réalisation discoïdale et étant fixé, de préférence par du ciment réfractaire, sur la surface supérieure du disque, caractérisé par le fait que les parois de l'évidement antérieur (17) dans la masse céramique (11) sont pourvues d'une enveloppe (18) qui empêche la pénétration d'humidité et qui entoure la masse d'oxyde de zirconium (13) et la masse de référence (15).

# Fig 1

Fig 2

Fig 3